# EUROPÄISCHE PATENTSCHRIFT

(11) **EP 1 003 987 B1**
(45) Veröffentlichungstag und Bekanntmachung des Hinweises auf die Patenterteilung: **22.09.2004**
(21) Anmeldenummer: 99931039.4
(22) Anmeldetag: 05.06.1999
(51) Int. Cl.: F16J 15/02

(54) **DICHTUNGSPROFIL ZUR ABDICHTUNG ZWEIER ZUSAMMENWIRKENDER KÖRPER, INSBESONDERE ZUR ABDICHTUNG VON LEUCHTENGEHÄUSEN GEGENÜBER DEREN ABSCHLUSSSCHEIBEN**
SEALING PROFILE FOR SEALING TWO INTERACTING BODIES, ESPECIALLY FOR SEALING OFF LAMP HOUSINGS FROM THEIR GLASS COVERS
PROFILE D'ETANCHEITE POUR ETANCHEIFIER DEUX CORPS COOPERANTS, EN PARTICULIER POUR ETANCHEIFIER DES BOITIERS DE LAMPES VIS-A-VIS DE LEURS VITRES DE FERMETURE

(30) Priorität: 15.06.1998 DE 29810708 U
(43) Veröffentlichungstag der Anmeldung: 31.05.2000
(73) Patentinhaber: Meteor Gummiwerke K.H. Bädje GmbH & Co. KG., 31167 Bockenem (DE)
(72) Erfinder: RANZAU, Heiko, D-31167 Bockenem (DE); SCHAPER, Karin, D-31167 Bockenem (DE)
(74) Vertreter: Sobisch, Peter, Dipl.-Ing.
(86) Internationale Anmeldenummer: PCT/EP1999/003899
(87) Internationale Veröffentlichungsnummer: WO 1999/066234

(56) Entgegenhaltungen:
- EP-A- 0 866 252
- DE-U- 9 106 181
- FR-A- 2 730 542
- US-A- 4 192 520
- US-A- 5 261 677

## Beschreibung

Die Erfindung betrifft ein Dichtungsprofil entsprechend dem Oberbegriff des Anspruchs 1.

Ein ähnliches Dichtungsprofil ist aus dem DE 91 06 181 U1 bekannt. Es besteht durchgängig aus Moosgummi, weist einen Profilfuß, einen Hauptabschnitt und einen Profilkopf auf und ist im Übrigen durch zwei durchgehende Hohlräume gekennzeichnet. Der halbkreisförmige Profilkopf ist mit durchgängigen Dichtrippen versehen, die sich im entspanntem Zustand radial nach außen erstrecken und ragt aus der Aufnahmenut eines Leuchtenglases heraus. Der Hauptabschnitt verjüngt sich entsprechend der Gestalt der Aufnahmenut zum Profilfuß hin, wobei Seitenwände eine Neigung von etwa 3° gegenüber einer Mittenlängsebene aufweisen. Der durch zwei, sich senkrecht zu der Mittenlängsebene erstreckende Rippen gekennzeichnete Fußabschnitt weist eine Breite auf, die im entspannten Zustand im Wesentlichen derjenigen des Profilkopfes entspricht und steht über zwei seitliche, ebenfalls durchgängige Ausnehmungen mit dem Hauptabschnitt in Verbindung. Der im Bereich der Ausnehmungen verbleibende Restquerschnitt des Dichtungsprofils unterscheidet sich jedoch nur unwesentlich von demjenigen des Hauptabschnitts. Querschnittsform und -breite des Hauptabschnitts sind im Übrigen im Wesentlichen an die sich ausgehend von einen Nutengrund trapezförmige erweiternde Aufnahmenut abgestimmt. Die genannten Rippen des Fußabschnitts können im eingesetzten Zustand in die ebenfalls genannten Ausnehmungen ausweichen. Aufgrund der im Verhältnis zu dem Hauptabschnitt im Wesentlichen gleichen Breitenerstreckung des Fußabschnitts ist eine im Wesentlichen lediglich reibschlüssige Fixierung des Dichtungsprofils in der Aufnahmenut gegeben, so dass die Sicherheit eines unbeabsichtigten Austretens aus der Aufnahmenut nur über den Verpressungszustand erreichbar ist.

Aus der US 5 261 677 A ist es bekannt, in eine, einen rechteckigen Aufnahmequerschnitt aufweisende, radial innen- oder außenseitig offene Ringnut einen Dichtungsring einzusetzen, der eine Abdichtung gegenüber einer Welle oder einer Buchse bewirkt. Der Querschnitt des Dichtungsringes ist durch zwei, sich aus dem Querschnitt der Aufnahmenut herauserstreckende, V-förmige Dichtrippenanordnungen gekennzeichnet, deren einzelne Dichtrippen zur Anlage an den Seiten der Aufnahmenut bestimmt sind. Die, bezüglich der Nut jeweils äußere Dichtrippenanordnung bildet eine, zur Anlage an einer radial inneren bzw. äußeren Gegenfläche bestimmte weitere Dichtrippe. Bei dieser Dichtungsanordnung sind keine Maßnahmen erkennbar, welche auf die Sicherung des in die Aufnahmenut eingesetzten Dichtringes abzielen. Insbesondere besteht in Abhängigkeit von den konkreten werkstofflichen Eigenschaften die Gefahr, dass der Dichtring unter Verformung der mit den Seitenwandungen in Anlage befindlichen Dichtrippen aus der Aufnahmenut unter vergleichsweise geringem Kraftaufwand herausziehbar ist.

Aus der US 4 192 520 A ist ein Dichtring bekannt, der in eine, sich zur Außenseite hin Y-förmig erweiternde Nut eingesetzt ist. An den Nutgrund des Querschnitts der Aufnahmenut, an dem ein Fußabschnitt des Querschnitts des Dichtringes anliegt, schließen sich rechtwinklig untereinander parallele Seitenwände an. An diese Seitenwände wiederum schließen sich den Querschnitt der Nut in Richtung zur Außenseite hin erweiternde, mit einer Senkrechten zum Nutengrund jeweils einen Winkel von 30° bis 60°, vorzugsweise 30°, bildende Seitenflächen an. An diesen Seitenflächen liegen komplementär geneigte Seitenflächen des Querschnitts des Dichtringes an, der mit einer oder auch zwei, zueinander parallelen Dichtrippen auf einer Dichtfläche versehen ist, die eine Dichtungsfunktion in Verbindung mit einem dieser gegenüberliegenden Teil ausüben. Zwischen dem Fußabschnitt und einer jeden Seitenfläche weist der Dichtring eine seitliche Rille auf, die verhindern soll, dass der Dichtring in Berührung mit der scharfen Übergangskante zwischen den zueinander parallelen Seitenwänden und den sich an diese anschließenden unter einem Winkel zu der Senkrechten verlaufenden Seitenflächen gerät. Von dem, an den schrägen Seitenflächen anliegenden Teil des Dichtringquerschnitts geht kein wesentlicher, dem Dichtring in der Nut haltender Einfluss aus. Diese Aufgabe kommt allein dem Fußabschnitt zu und es beruht deren Lösung nach Maßgabe des Verspannungszustands dieses Fußabschnitts ausschließlich auf reibschlüssigen Wirkungen.

Aus der Praxis, die in der Zeitschrift "Kautschuk und Gummi Kunststoffe" (Dr. Alfred Hüthig Verlag GmbH, Heidelberg, Deutschland) No. 1/91, Beitrag "Elastomer-Dichtsysteme in Kraftfahrzeug-Karosserien, Ziffer 5.1.3, beschrieben ist, ist bekannt, bei der Abdichtung von Streuscheiben gegenüber einem Lampengehäuse im Querschnitt trapezförmige, ovale oder auch runde Moosgummidichtschnüre zu verwenden, die aus einem EPDM-Extrusionsprofil zu einem Ring konfektioniert sind. Darüber hinaus werden Moosgummiprofile in vielfältiger Weise, u.a. als Puffer für Stoßkanten, verwendet. Praktisch hat sich jedoch gezeigt, dass sich solche Dichtschnüre häufig nur schlecht montieren lassen, je nach Einbaulage eine Verklebung erfordern und gelegentlich im montierten Zustand Undichtigkeiten zwischen Leuchtengehäuse und Streuscheibe aufweisen.

Der Erfindung liegt die Aufgabe zugrunde, ein Dichtungsprofil der eingangs genannten Art zur Verfügung zu stellen, welches ohne Verklebung leicht und sicher in der Einbaunut montierbar ist und in einfacher Weise im montierten Zustand neben einer größeren Sicherheit gegenüber Undichtigkeiten auch eine solche gegenüber einem unbeabsichtigten Herausziehen aus der Einbaunut gewährleistet.

Gelöst ist diese Aufgabe bei einem solchen Dichtungsprofil durch die Merkmale des Kennzeichnungsteils des Anspruchs 1.

Gemäß der Erfindung ist vorgesehen, dass sich an einen, eine besondere Breite aufweisenden Dichtabschnitt eines Dichtungsprofils an der von der Dichtfläche abgewandten Seite über einen biegeweichen Verbindungsabschnitt ein seitliche Halteflächen aufweisender Fußabschnitt anschließt. Diese Konstruktion erlaubt es, das Dichtungsprofil einerseits auf eine optimale Montage und Halterung hin wie auch auf eine optimale Dichtung hin zu gestalten, da der biegeweiche Verbindungsabschnitt verhindert, dass sich für die Dichtfunktion gewählte Dimensionierungen und Einstellungen negativ auf die Montage und die Halterung auswirken. Während es nämlich für die Dichtfunktion ungünstig ist, das Dichtungsgummi schon bei der Montage in einer Einbaunut eines Leuchtengehäuses stark zu komprimieren, ist es für die Haltefunktion gerade erforderlich, mindestens bereichsweise eine hohe Haltekraft durch eine große Stauchung zu erreichen.

Der biegeweiche Verbindungsabschnitt hat darüber hinaus den Vorteil, dass die der Abschlussscheibe gegenüberliegende Dichtfläche nicht abkippt, wenn beispielsweise die auch als Dichtungsbett bezeichnete Einbaunut fertigungsbedingt ungleichmäßig ausgebildet ist. Der biegeweiche Verbindungsabschnitt bietet die Möglichkeit, dass sich der Dichtabschnitt gut an das Dichtungsbett und die Abschlussscheibe anpasst ist, ohne dass gleichzeitig auf eine sichere Halterung verzichtet werden muss. Daher ist bei einer Verwendung des erfindungsgemäßen Dichtungsprofils auch bei komplexer Einbaugeometrie, die auch von der Abschlussscheibenebene weggelaufene Ausschnitte aufweisen kann, eine Verklebung nicht mehr erforderlich. Dadurch wird nicht nur der Montageaufwand verringert, sondern es wird auch ein späteres, sortenreines Recyclen erleichtert. Eine Gefahr, dass das Dichtungsprofil aus dem Dichtungsbett herausfallen könnte, besteht dabei nicht. Dazu trägt auch die seitliche Kompression des eingebauten Dichtabschnitts bei.

Der Fußabschnitt des Dichtungsprofils weist federnde, seitliche Vorsprünge auf, die mit der Maßgabe angeordnet sind, dass sie beim Einsetzen des Dichtungsprofils in die Einbaunut in Richtung auf den Verbindungsabschnitt hin klappbar sind. Dies bedeutet, dass bei einer Zugkraft, die so gerichtet ist, dass sie das Dichtungsprofil aus dem Dichtungsbett zu ziehen droht, ein solches Herausziehen nur durch Umkrempeln der federnden Halteleiste, somit unter Aufbringung beträchtlicher Verformungskräfte möglich ist. Diese federnden Vorsprünge werden bei der Montage stärker komprimiert als der Dichtabschnitt, so dass demzufolge eine hohe Haltekraft erzielt wird. Diese Haltekraft ist somit im Gegensatz zu dem eingangs dargelegten Stand der Technik nicht nur reibschlüssig sondern gleichermaßen durch die räumliche Orientierung der genannten Vorsprünge bedingt, die seitliche Haltekuppen bilden, die im nicht montierten Zustand seitlich über die Ebene der entsprechenden Anlagefläche des Dichtabschnitts des Dichtungsprofils hinausragen.

Die Montage wird entsprechend den Merkmalen der Ansprüche 5 und 6 erleichtert, wenn die seitlichen Anlageflächen gegenüber der Mittenlängsebene eine um 2° bis 10°, vorzugsweise um 4° größere Neigung aufweisen, als die gegenüberliegenden Wandabschnitte der Einbaunut gegenüber deren Mittenlängsebene, und wenn die fußnahen Endbereiche des Dichtabschnitts eine geringere Breite aufweisen als der Abstand der entsprechenden, gegenüberliegenden Wandabschnitte der Einbaunut. Bei einer solchen Dimensionierung läßt sich das Dichtungsprofil leicht in die Einbaunut bis zu deren Grund hineindrücken, selbst wenn Fertigungstoleranzen und Unebenheiten der Einbaunut vorhanden sind. Durch die stärkere Neigung der seitlichen Anlageflächen des Dichtabschnitts fädelt sich das Dichtungsprofil quasi selbst ein. Darüber hinaus wird ein Ausgleichsvolumen zur Verfügung gestellt, so dass der Dichtabschnitt gegenüber bekannten Dichtschnüren nach der Montage in die Einbaunut eine geringere Vorverformung und damit bessere Dichteigenschaften aufweist.

Um eine gute Dichtwirkung zu gewährleisten, sollte entsprechend den Merkmalen des Anspruchs 7 der Dichtabschnitt gegenüber der Einbaunut im Bereich der Dichtfläche eine Breite aufweisen, die weniger als 20 Prozent, vorzugsweise weniger als 10 Prozent größer ist als die Breite der Einbaunut in diesem Bereich. Dadurch bleibt eine hohe Verformungskapazität des Dichtungsprofils im Bereich des Dichtabschnitts erhalten.

Zum Schutz gegen Feuchtigkeitsunterwanderung ist entsprechend den Merkmalen der Ansprüche 8 und 9 gemäß einer bevorzugten Ausführungsform der Erfindung vorgesehen, dass der Fußabschnitt auf der von der Dichtfläche abgewandten Seite eine Dichtrippe aufweist. Diese Dichtrippe sollte mit zur Mittenlängsebene schrägen Seitenwänden und einer Abrundung an ihrem Scheitel ausgebildet sein, so dass eine Verformung der Dichtrippe leicht möglich ist und sich somit Fertigungstoleranzen im Grund der Einbaunut nicht negativ auf die Lage der der Abschlussscheibe gegenüberliegenden Dichtfläche auswirken können.

Weitere vorteilhafte Ausgestaltungen und Weiterbildungen der Erfindung ergeben sich aus den übrigen Unteransprüchen sowie aus den Zeichnungen im Zusammenhang mit der Beschreibung. Es zeigen:
- Fig. 1: eine erste Ausführungsform eines erfindungsgemäßen Dichtungsprofils in einer über eine Einbaunut projizierten Darstellung und
- Fig. 2: eine weitere Ausführungsform eines erfindungsgemäßen Dichtungsprofils in einer Fig. 1 entsprechenden Darstellung.

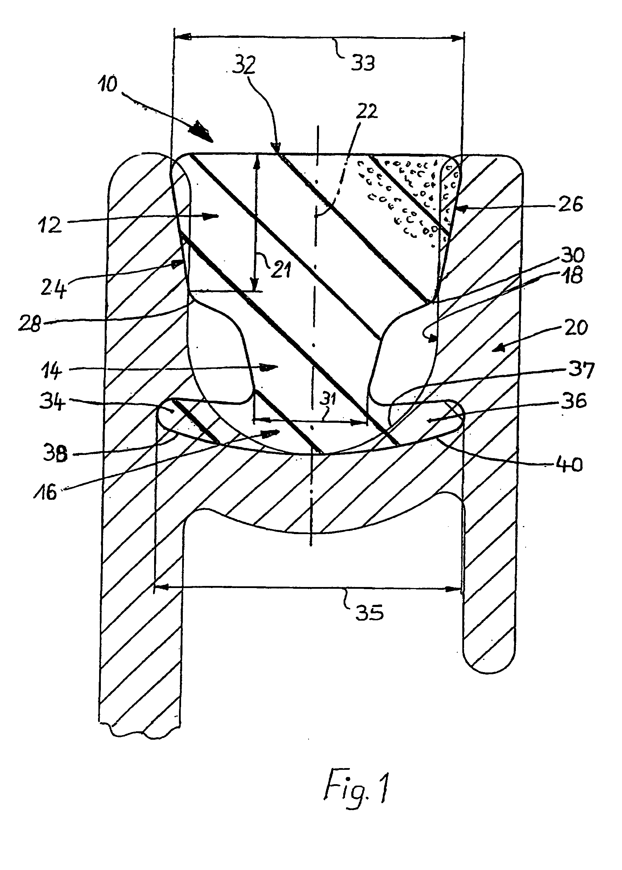

Das in Fig. 1 gezeigte Dichtungsprofil 10 weist einen Dichtabschnitt 12, einen Verbindungsabschnitt 14 und einen Fußabschnitt 16 auf und besteht einheitlich aus einem Moosgummi der Härte 20 Shore A. Das Dichtungsprofil 10 ist in einer über eine Einbaunut 18 eines Kfz-Leuchtengehäuses 20 projizierten Darstellung gezeigt, so daß das Dichtungsprofil 10 in seiner unkomprimierten Form gezeigt ist, in der es nach dem Abschluß des Extrusionsvorgangs erscheint. Daher läßt sich aus der Projektion erkennen, in welchem Umfang der Dichtabschnitt 12 und der Fußabschnitt 16 im eingebauten Zustand gegenüber dem Ausgangszustand verformt sein werden.

Der Dichtabschnitt 12 ist so ausgebildet, daß er eine Höhe 21 von etwa 50% der Höhe des gesamten Dichtungsprofils 10 aufweist, wobei seine seitlichen Anlageflächen 24, 26 eine Neigung zur Mittenlängsebene 22 des Dichtungsprofils 10 von etwa 10° aufweisen und gemäß Fig. 1 nach oben divergieren. Dadurch und durch Abrundungen 28, 30 im Übergangsbereich vom Dichtabschnitt 12 zum Verbindungsabschnitt 14 wird ein Einfädeln des Dichtabschnitts 12 beim Einbau des Dichtungsprofils 10 erleichtert und ein Kippen einer Dichtfläche 32 des Dichtabschnitts 12 im wesentlichen verhindert. Außerdem wird der feste Sitz des Dichtungsprofils 10 in der Einbaunut 18 auch ohne Verklebung verbessert.

An den Dichtabschnitt 12 schließt sich an seinem der Dichtfläche 32 gegenüberliegenden Ende der Verbindungsabschnitt 14 an, der eine weit unter die Breite der Einbaunut 18 gehende Verjüngung darstellt. An seiner schmalsten Stelle weist der Verbindungsabschnitt 14 eine Breite auf, die nur etwa 38% der größten Breite 33 des Dichtabschnitts 12 entspricht. Dadurch ist der Verbindungsabschnitt 14 biegeweich, so daß die Lage des sich an den Verbindungsabschnitt 14 anschließenden Fußabschnittes 16 ohne Einfluß auf die Lage des Dichtabschnitts 12 bleibt.

Der Fußabschnitt 16 weist gegenüber dem Dichtabschnitt 12 rechtwinklig zur Mittenlängsebene 22 eine um 7% größere Breite 35 auf. Dadurch und durch die im Bereich eines Nutgrundes 37 der Einbaunuten 18 üblicherweise vorhandene Verjüngung der Einbaunut erfolgt beim Eindrücken des Dichtungsprofils 10 in die Einbaunut 18 eine erhebliche Kompression des Fußabschnitts 16, wobei gleichzeitig mindestens teilweise ein Anklappen seitlicher, als federnde Halteleisten ausgebildeter Vorsprünge 34. 36 des Fußabschnitts 16 in Richtung auf den Verbindungsabschnitt 14 erfolgt. Dadurch kommen seitliche Halteflächen 38, 40 der Vorsprünge 34, 36 an der Einbaunut 18 so zur Anlage, daß ein Herausziehen des Dichtungsprofils 10 aus der Einbaunut 18 nur unter Umkrempeln der seitlichen Vorsprünge 34, 36 möglich wäre.

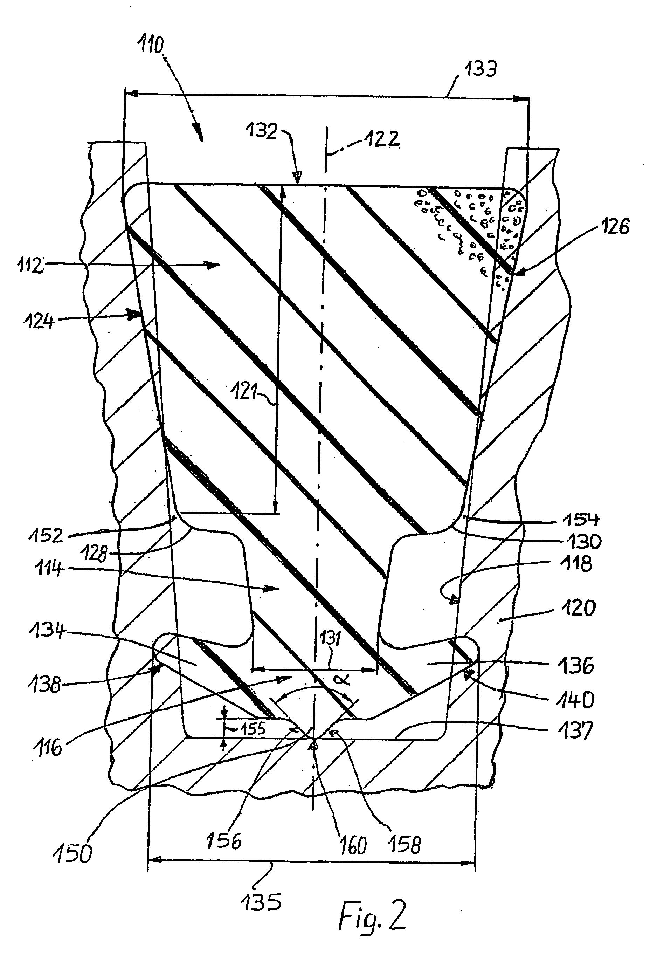

Das Dichtungsprofil 110 gemäß der zweiten Ausführungsform in Fig. 2 unterscheidet sich von dem Dichtungsprofil 10 gemäß der ersten Ausführungsform in Fig. 1 lediglich in den Abmaßen und Proportionen sowie einer zur Anlage im Nutgrund 137 vorgesehenen Dichtrippe 150. Zur Bezeichnung von Flächen und Abschnitten, die denen der ersten Ausführungsform gemäß Fig. 1 entsprechen, sind daher bei der Beschreibung der zweiten Ausführungsform Bezugszeichen verwendet worden, die gegenüber denen bei der ersten Ausführungsform um 100 erhöht sind. Auf die Beschreibung der entsprechenden Teile zu Fig. 1 wird insoweit verwiesen.

Im Gegensatz zu dem Dichtabschnitt 12 des Dichtungsprofils 10 gemäß der ersten Ausführungsform weist der Dichtabschnitt 112 des Dichtungsprofils 110 gemäß der zweiten Ausführungsform eine Höhe 121 von etwa 60% der Gesamthöhe des Dichtungsprofils 110 auf, wobei die seitlichen Anlageflächen 124, 126 des Dichtabschnitts 112 wiederum etwa 10° zur Mittenlängsebene 122 geneigt sind. Durch die größere Höhe 121 des Dichtabschnitts 112 werden selbst bei geneigten Wänden der Einbaunut 118 Freiräume 152, 154 geschaffen, in welche Moosgummimaterial des Dichtabschnitts 112 im eingebauten Zustand des Dichtungsprofils 110 ausweichen kann. Dadurch erfolgt nur eine geringfügige Stauchung des Moosgummimaterials des Dichtabschnitts 112, so daß eine gute Dichtwirkung erzielt werden kann. Die Seitenwände der Einbaunut 118 sind im gezeigten Fall um 5° zur Mittenlängsebene der Einbaunut 118 geneigt und konvergieren nach unten in Fig. 2, so daß die relative Neigung zwischen den seitlichen Anlageflächen 124, 126 und den Wänden der Einbaunut 118 jeweils 5° beträgt. Vorzugsweise sollte das Moosgummimaterial wie das Moosgummimaterial des Dichtungsprofils 10 gemäß der ersten Ausführungsform eine Härte von 20 Shore A und einen Druckverformungsrest < 40 % aufweisen.

Die Dichtrippe 150, die unten am Fußabschnitt 116 angeordnet ist, erstreckt sich nur über etwa 10% der Breite 135 des Fußabschnitts 116 im nicht eingebauten Zustand und hat eine Höhe 155 von nur etwa 3% der Gesamthöhe des Dichtungsprofils 110, so daß sich die Dichtungsrippe 150 leicht verformen läßt und immer eine große Sicherheit gegen Feuchtigkeitsunterwanderung des eingebauten Dichtungsprofils 110 bietet. Dies wird noch durch die schrägen Seitenwände 156, 158 der Dichtrippe 150, die zueinander um einen Winkel α von 90° und zur Mittenlängsebene 122 um 45° geneigt sind sowie eine Abrundung 160 am Scheitel der Dichtrippe 150 verstärkt.

## Patentansprüche

1. Dichtungsprofil (10;110) zur Abdichtung zweier zusammenwirkender Körper gegenüber einander, insbesondere zur Abdichtung von Leuchtengehäusen (20;120) gegenüber deren Abschlußscheiben, wobei das Dichtungsprofil (10;110) in eine Einbaunut (18;118) eines (20;120) der Körper eindrückbar ist, mit einem Dichtabschnitt (12;112), der eine Dichtfläche (32;132) und mit der Einbaunut (18;118) zusammenwirkende seitliche Anlageflächen (24,26;124,126) aufweist, und mit einem, der Dichtfläche (32;132) gegenüberliegenden, über einen Verbindungsabschnitt (14;114) an den Dichtabschnitt (12;112) angeschlossenen, seitliche Halteflächen (38,40;138,140) aufweisenden Fußabschnitt (16;116), wobei der Verbindungsabschnitt (14;114) biegeweich ausgebildet ist, und rechtwinklig zur Mittenlängsebene (22;122) eine mittlere Breite von weniger als 40 % der größten Breite (33;133) des entspannten Dichtabschnitts (12;112) aufweist und wobei die Breite (33; 133) des entspannten Dichtabschnitts (12; 112) rechtwinkling zu einer Mittenlängsebene (22;122) des Dichtungsprofils (10; 110) zumindest örtlich größer als die Breite des zugehörigen Bereichs der Einbaunut (18;118) ist, **dadurch gekennzeichnet, dass** an dem Fußabschnitt (16,116) federnde, beim Einsetzen in die Einbaunut (18,118) in Richtung auf den Verbindungsabschnitt (14,114) hin klappbare Vorsprünge (34,36;134,136) angeformt sind, welche die genannten seitlichen, zur Anlage an der Einbaunut (18,118) bestimmten Halteflächen (38,40;138,140) bilden.

2. Dichtungsprofil nach Anspruch 1, **dadurch gekennzeichnet, dass** der Verbindungsabschnitt (14;114) quer zur Profillängserstreckung eine Höhe von 10 % bis 50 %, vorzugsweise 15 % bis 25%, der Höhe des Dichtungsprofils aufweist.

3. Dichtungsprofil nach Anspruch 1 oder 2, **dadurch gekennzeichnet, dass** der Verbindungsabschnitt (14; 114) rechtwinklig zur Mittenlängsebene (22,122) eine Breite aufweist, die zu dem Fußabschnitt (16;116) hin bis zu einer minimalen Breite (31;131) abnimmt.

4. Dichtungsprofil nach einem der Ansprüche 1 bis 3, **dadurch gekennzeichnet, dass** die seitlichen Anlageflächen (24,26;124,126) des Dichtabschnitts (12;112) jeweils mit einer Abrundung (28,30;128,130) in den schmaleren Verbindungsabschnitt (14; 114) übergehen.

5. Dichtungsprofil nach einem der Ansprüche 1 bis 4, **dadurch gekennzeichnet, dass** die seitlichen Anlageflächen (24,26;124,126) des entspannten Dichtabschnitts (12;112) gegenüber der Mittenlängsebene (22;122) eine um 2° bis 10°, vorzugsweise um 5° größere Neigung aufweisen als die gegenüberliegenden Wandabschnitte der Einbaunut (18;118) gegenüber deren Mittenlängsebene und dass der entspannte Dichtabschnitt (12;112) rechtwinklig zur Mittenlängsebene (22;122) eine Breite aufweist, die ausgehend von einer maximalen Breite (33;133) zu dem Verbindungsabschnitt (14;114) hin bis zu einer minimalen Breite abnimmt.

6. Dichtungsprofil nach Anspruch 5 **dadurch gekennzeichnet, dass** ein dem Verbindungsabschnitt (14;114) zugewandter Endbereich des entspannten Dichtabschnitts (112) eine Breite aufweist, die geringer ist als der Abstand der gegenüberliegenden Wandabschnitte der Einbaunut (118).

7. Dichtungsprofil nach einem der Ansprüche 1 bis 6, **dadurch gekennzeichnet, dass** der entspannte Dichtabschnitt (12;112) gegenüber der Einbaunut (18;118) im Bereich der Dichtfläche (32;132) rechtwinklig zur Mittenlängsebene (22;122) eine weniger als 20% größere, vorzugsweise weniger als 10% größere Breite als die Breite der Einbaunut (18;118) in diesem Bereich aufweist.

8. Dichtungsprofil nach einem der Ansprüche 1 bis 7, **dadurch gekennzeichnet, dass** der Fußabschnitt (116) auf seiner von dem Verbindungsabschnitt (114) abgewandten Seite eine Dichtrippe (150) zur Abdichtung gegenüber einem Nutgrund (137) gegen Feuchtigkeitsunterwanderung aufweist.

9. Dichtungsprofil nach Anspruch 8, **dadurch gekennzeichnet, dass** die Dichtrippe (150) durchgehend mit zur Mittenlängsebene (122) schrägen Seitenwänden (156,158) und einer Abrundung (160) an ihrem Scheitel ausgebildet ist.

10. Dichtungsprofil nach einem der Ansprüche 1 bis 9, **dadurch gekennzeichnet, dass** mindestens der Fußabschnitt (16;116) und der Verbindungsabschnitt (14;114), vorzugsweise das gesamte Dichtungsprofil (10;110), aus Moosgummi mit gemischtzelliger Porenstruktur und geschlossener Außenhaut und einer Härte von 10 bis 25 Shore A, vorzugsweise 20 Shore A mit einem Druckverformungsrest < 40% bestehen.

## Claims

1. Sealing profile (10; 110) for sealing two co-operating bodies with respect to each other, in particular for sealing lamp housings (20; 120) with respect to their end plates, wherein the sealing profile (10; 110) can be impressed into a mounting groove (18; 118) of one (20; 120) of the bodies, having a sealing section (12; 112) which comprises a sealing surface (32; 132) and lateral contacting surfaces (24, 26; 124, 126) which co-operate with the mounting groove (18; 118), and having a foot section (16; 116) which comprises lateral holding surfaces (38, 40; 138, 140), is connected to the sealing section (12; 112) via a connecting section (14; 114) and lies opposite the sealing surface (32; 132), wherein the connecting section (14; 114) is formed in a flexible manner and comprises, perpendicular to the central longitudinal plane (22; 122), an average width which is less than 40% of the largest width (33; 133) of the non-tensioned sealing section (12; 112) and wherein the width (33; 133) of the non-tensioned sealing section (12; 112) perpendicular to a central longitudinal plane (22; 122) of the sealing profile (10; 110) is greater, at least locally, than the width of the associated region of the mounting groove (18; 118), **characterised in that** resilient projections (34, 36; 134, 136) are formed on the foot section (16, 116), which projections can swing in the direction of the connecting section (14; 114) upon insertion into the mounting groove (18; 118) and form the said lateral holding surfaces (3 8, 40; 138, 140) which are specific for contacting the mounting groove (18, 118).

2. Sealing profile as claimed in Claim 1, **characterised in that** transverse to the profile longitudinal extension the connecting section (14; 114) has a height of 10% to 50%, preferably 15% to 25%, of the height of the sealing profile.

3. Sealing profile as claimed in Claim 1 or 2, **characterised in that** perpendicular to the central longitudinal plane (22, 122) the connecting section (14; 114) has a width which decreases towards the foot section (16; 116) to a minimum width (31; 131).

4. Sealing profile as claimed in any one of Claims 1 to 3, **characterised in that** the lateral contacting surfaces (24, 26; 124, 126) of the sealing section (12; 112) each become the narrower connecting section (14; 114) by means of a shoulder (28, 30; 128, 130).

5. Sealing profile as claimed in any one of Claims 1 to 4, **characterised in that** the lateral contacting surfaces (24, 26; 124, 126) of the non-tensioned sealing section (12; 112) are inclined with respect to the central longitudinal plane (22; 122) by an angle which is 2° to 10°, preferably 5°, greater than the angle of inclination of the opposite wall sections of the mounting groove (18; 118) with respect to their central longitudinal plane, and **in that** perpendicular to the central longitudinal plane (22; 122) the non-tensioned sealing section (12; 112) has a width which decreases towards the connecting section (14; 114) from a maximum width (33; 133) to a minimum width.

6. Sealing profile as claimed in Claim 5, **characterised in that** an end region of the non-tensioned sealing section (112) facing the connecting section (14; 114) has a width which is smaller than the distance of the opposite wall sections of the mounting groove (118).

7. Sealing profile as claimed in any one of Claims 1 to 6, **characterised in that** the non-tensioned sealing section (12; 112) with respect to the mounting groove (18; 118) in the region of the sealing surface (32; 132) perpendicular to the central longitudinal plane (22; 122) has a width which is less than 20%, preferably less than 10%, greater than the width of the mounting groove (18; 118) in this region.

8. Sealing profile as claimed in any one of Claims 1 to 7, **characterised in that** the foot section (116) comprises a sealing rib (150) on its side remote from the connecting section (114) for sealing with respect to a groove base (137) to prevent infiltration of moisture.

9. Sealing profile as claimed in Claim 8, **characterised in that** the sealing rib (150) is formed continuously with lateral walls (156, 158) which are inclined with respect to the central longitudinal plane (122) and said sealing rib is formed with a shoulder (160) on its apex.

10. Sealing profile as claimed in any one of Claims 1 to 9, **characterised in that** at least the foot section (16; 116) and the connecting section (14; 114), preferably the entire sealing profile (10; 110), consists of sponge rubber having an open and closed cell pore structure and a closed skin and a hardness of 10 to 25 Shore A, preferably 20 Shore A having a permanent set of less than 40%.

## Revendications

1. Joint d'étanchéité profilé (10; 110) pour étancher deux corps coopérants l'un par rapport à l'autre, en particulier pour étanchéifier des boîtiers de lampes (20; 120) par rapport à leurs plateaux de fermeture, le joint d'étanchéité profilé (10; 110) pouvant être poussé dans une rainure de montage (18; 118) de l'un (20; 120) des deux corps, comportant une partie d'étanchéité (12; 112) qui comprend une surface d'étanchéité (32; 132) et des surfaces d'appui latérales (24, 26; 124, 126) coopérant avec la rainure de montage (18; 118), et comportant une partie de base (16; 116) opposée à la surface d'étanchéité (32; 132), ayant des surfaces de retenue latérales (38, 40; 138, 140) et reliée à la partie d'étanchéité (12; 112) par l'intermédiaire d'une partie de liaison (14; 114), cette partie de liaison (14; 114) étant souple à la flexion et ayant une largeur moyenne, mesurée orthogonalement au plan médian longitudinal (22; 122), de moins de 40% de la largeur maximale (33; 133) de la partie d'étanchéité (12; 112) détendue, la largeur (33; 133) de la partie d'étanchéité (12; 112) détendue, mesurée orthogonalement à un plan médian longitudinal (22; 122) du joint d'étanchéité profilé (10; 110) étant plus grande, au moins par endroits, que la largeur de la partie correspondante de la rainure de montage (18; 118), **caractérisé en ce que** des parties en saillie (34, 36; 134, 136) élastiques et pliables vers la partie de liaison (14; 114) lors de l'insertion dans la rainure de montage (18; 118) sont formées sur la partie de base (16; 116), ces parties en saillie constituant lesdites surfaces de retenue latérales (38, 40; 138, 140) destinées à venir en appui sur la rainure de montage (18; 118).

2. Joint d'étanchéité profilé selon la revendication 1, **caractérisé en ce que** la partie de liaison (14; 114) présente une hauteur de 10% à 50%, de préférence de 15% à 25%, mesurée transversalement à l'extension longitudinale du profilé, par rapport à la hauteur du joint d'étanchéité profilé.

3. Joint d'étanchéité profilé selon la revendication 1 ou 2, **caractérisé en ce que** la partie de liaison (14; 114) présente une largeur mesurée orthogonalement par rapport au plan médian longitudinal (22; 122) qui diminue en direction de la partie de base (16; 116) jusqu'à une largeur minimale (31; 131).

4. Joint d'étanchéité profilé selon l'une des revendications 1 à 3, **caractérisé en ce que** les surfaces d'appui latérales (24, 26; 124, 126) de la partie d'étanchéité (12; 112) présentent chacune une transition arrondie (28, 30; 128, 130) à l'endroit de la transition vers la partie de liaison (14; 114) plus étroite.

5. Joint d'étanchéité profilé selon l'une des revendications 1 à 4, **caractérisé en ce que** les surfaces d'appui latérales (24, 26; 124, 126) de la partie d'étanchéité (12; 112) détendue présentent une inclinaison par rapport au plan longitudinal médian (22; 122) qui est de 2° à 10°, de préférence de 5° plus grande que celle des parties de paroi opposées de la rainure de montage (18; 118) par rapport à leur plan longitudinal médian, et que la partie d'étanchéité (12; 112) détendue présente une largeur, mesurée orthogonalement par rapport au plan longitudinal médian (22; 122), qui diminue à partir de la largeur maximale (33; 133) jusqu'à une largeur minimale en direction de la partie de liaison (14; 114).

6. Joint d'étanchéité profilé selon la revendication 5, **caractérisé en ce qu'**une partie terminale de la partie d'étanchéité (112) détendue, faisant face à la partie de liaison (14; 114), présente une largeur qui est plus petite que la distance des parties de paroi opposées de la rainure de montage (118).

7. Joint d'étanchéité profilé selon l'une des revendications 1 à 6, **caractérisé en ce que** la partie d'étanchéité (12; 112) détendue présente une largeur par rapport à la rainure de montage (18; 118) dans la région de la surface d'étanchéité (32; 132) et orthogonalement au plan longitudinal médian (22; 122) qui est de moins de 20% plus grande, de préférence de moins de 10% plus grande, que la largeur de la rainure de montage (18; 118) dans cette région.

8. Joint d'étanchéité profilé selon l'une des revendications 1 à 7, **caractérisé en ce que** la partie de base (116) comporte sur son côté opposé à la partie de liaison (114) une nervure d'étanchéité (150) afin d'assurer l'étanchéité par rapport à un fond de rainure (137) contre la migration d'humidité.

9. Joint d'étanchéité profilé selon la revendication 8, **caractérisé en ce que** la nervure d'étanchéité (150) est formée en continu avec des parois latérales obliques (156, 158) par rapport au plan longitudinal médian (122) et avec un arrondissement (160) à son sommet.

10. Joint d'étanchéité profilé selon l'une des revendications 1 à 9, **caractérisé en ce qu'**au moins la partie de base (16; 116) et la partie de liaison (14; 114), de préférence le joint d'étanchéité profilé (10; 110) en entier, consistent en caoutchouc mousse ayant une structure de pores à cellules mixtes et une enveloppe extérieure fermée, ayant une dureté de 10 à 25 Shore A, de préférence de 20 Shore A, et un résidu de déformation sous pression de moins de 40%.
